# EUROPEAN PATENT APPLICATION

(11) **EP 3 893 128 A1**
(43) Date of publication of application: **13.10.2021**
(21) Application number: 20861973.4
(22) Date of filing: 08.09.2020
(51) Int. Cl.: G06F 16/951

(54) **CRAWLER DATA RECOGNITION METHOD, SYSTEM AND DEVICE**

(30) Priority: 24.02.2020 CN 202010112134
(71) Applicant: Wangsu Science & Technology Co., Ltd., Shanghai 200030 (CN)
(72) Inventor: CHEN, Zhiyong, Shanghai 200030 (CN); WANG, Fengjie, Shanghai 200030 (CN); ZHAO, Zhiwen, Shanghai 200030 (CN)
(74) Representative: Vinsome, Rex Martin
(86) International application number: PCT/CN2020/114053
(87) International publication number: WO 2021/169239

(57) **Abstract**

The present disclosure discloses a method, a system and a device for identifying crawler data. The method includes: acquiring sitemap data of a target website and generating a vector graph of the sitemap data (S1); acquiring session data of the target website, and mapping the session data into a subgraph in the vector graph based on requests contained in the session data (S3); and adding a session tag to the session data, where the session tag is configured to characterize whether the session data is crawler data, and training a preset classifier based on the session tag and the subgraph to obtain a trained classifier for distinguishing crawler data from non-crawler data (S5).

## Description

### CROSS REFERENCE TO RELATED APPLICATIONS

The present disclosure claims priority to Chinese patent application No. 202010112134. 8 entitled "METHOD, SYSTEM AND DEVICE FOR IDENTIFYING CRAWLER DATA" filed on February 24, 2020, which is hereby incorporated by reference in its entirety.

### TECHNICAL FIELD

The present disclosure relates to the field of Internet technology, in particular to a method, a system and a device for identifying crawler data.

### BACKGROUND

With the continuous development of Internet technology, the amount of information in the network has also exploded. At present, crawler technology may be adopted to automatically acquire web page content, so as to quickly filter out the required information from a large amount of information. In practical applications, crawlers may include legitimate crawlers for search engines and malicious crawlers for illegal data collection. In order to prevent the server from being attacked by malicious crawlers, it is necessary to screen the access data, so as to filter out crawler data for further analysis.

At present, crawler data may be identified or restricted by adding a UserAgent blacklist, restricting access frequency of an IP address, and identifying device fingerprints, etc. However, it takes a lot of effort to maintain the UserAgent blacklist and the IP address library, and crawler data may bypass these detection methods by a proxy IP address or modifying the UserAgent, resulting in inefficiency of the existing crawler data identification methods.

### SUMMARY

The objective of the present disclosure is to provide a method, a system and a device for identifying crawler data, which can effectively identify crawler data.

In order to achieve the above objective, one aspect of the present disclosure provides a method for identifying crawler data, including: acquiring sitemap data of a target website and generating a vector graph of the sitemap data; acquiring session data of the target website, and mapping the session data into a subgraph in the vector graph based on requests contained in the session data; and adding a session tag to the session data, where the session tag is configured to characterize whether the session data is crawler data, and training a preset classifier based on the session tag and the subgraph to obtain a trained classifier for distinguishing crawler data from non-crawler data.

In order to achieve the above objective, another aspect of the present disclosure further provides a system for identifying crawler data, including: a vector graph generating unit, configured to acquire sitemap data of a target website and generate a vector graph of the sitemap data; a subgraph mapping unit, configured to acquire session data of the target website, and map the session data into a subgraph in the vector graph based on requests contained in the session data; and a training unit, configured to add a session tag to the session data, where the session tag is configured to characterize whether the session data is crawler data, and train a preset classifier based on the session tag and the subgraph to obtain a trained classifier for distinguishing crawler data from non-crawler data.

In order to achieve the above objective, another aspect of the present disclosure further provides a device for identifying crawler data, including a memory and a processor. The memory is configured to store a computer program, when executed by the processor, causing the processor to implement the above-described method for identifying crawler data.

It can be seen from the above that the technical solution provided by one or more embodiments of the present disclosure may identify crawler data through machine learning. Specifically, for a target website to be identified, the sitemap data of the target website may be acquired, which is usually the data in an eXtensible Markup Language (XML) format. In the present disclosure, the sitemap data may be converted into the vector graph, thereby converting the data in XML format into diagram data. Subsequently, according to the requests contained in the session data of the target website, the session data may be mapped into the subgraph of the vector graph. The subgraph may characterize the way in which the session data is accessed to. Since crawler data and non-crawler data are often accessed in different ways, the subgraph obtained by mapping may be used to distinguish whether the session data is crawler data. Then, by using the session tag of the session data and the subgraph obtained by mapping, a machine learning algorithm may be adopted to train the preset classifier, so as to obtain the trained classifier for distinguishing crawler data from non-crawler data. According to the technical solution of the present disclosure, by converting the data into a diagram, the diagram may be used as a training sample to obtain an accurate classifier by training. Subsequently, the trained classifier may predict whether the input session data is crawler data. It can be seen that the technical solution provided by the present disclosure may accurately and efficiently predict whether the session data is crawler data through the classifier obtained by training.

### BRIEF DESCRIPTION OF THE DRAWINGS

In order to illustrate the technical solution in the embodiments of the present disclosure more clearly, the accompanying drawings used in the description of the embodiments are briefly introduced below. It is apparent that the drawings descripted below are only some embodiments of the present disclosure. For those skilled in the art, other drawings may be obtained in accordance with these drawings without any creative work.
FIG. 1 is a step diagram of a method for identifying crawler data in an embodiment of the present disclosure;
FIG. 2 is a flowchart of training a classifier in an embodiment of the present disclosure;
FIG. 3 is a schematic diagram of a vector graph in an embodiment of the present disclosure;
FIG. 4 is a schematic diagram of subgraph mapping in an embodiment of the present disclosure;
FIG. 5 is a schematic diagram of a subgraph in an embodiment of the present disclosure;
FIG. 6 is a flowchart of identifying crawler data in an embodiment of the present disclosure;
FIG. 7 is a schematic diagram of functional modules of a system for identifying crawler data in an embodiment of the present disclosure;
FIG. 8 is a schematic diagram of an internal structure of a device for identifying crawler data in an embodiment of the present disclosure.

### DETAILED DESCRIPTION

In order to make the objectives, technical solutions and advantages of the present disclosure clearer, the technical solutions of the present disclosure will be described clearly and completely with reference to specific embodiments of the present disclosure and corresponding drawings. It is obvious that the described embodiments are only some embodiments of the present disclosure, rather than all embodiments. Based on the embodiments in the present disclosure, all other embodiments obtained by those skilled in the art without creative work are within the protection scope of the present disclosure.

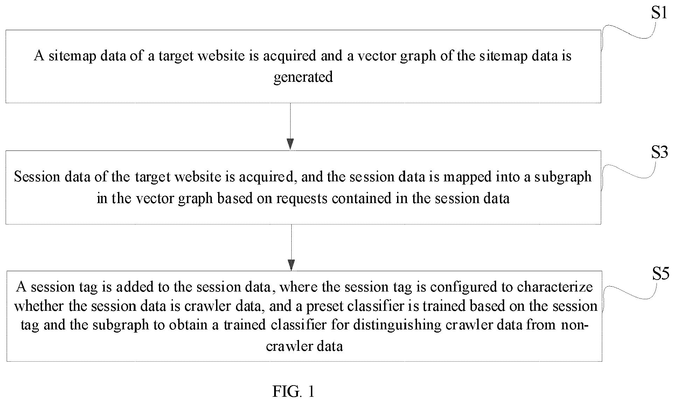

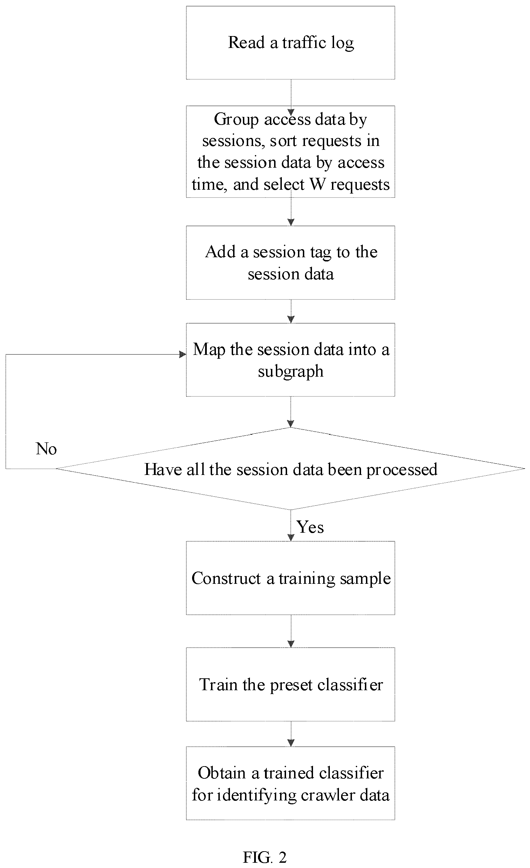

The present disclosure provides a method for identifying crawler data. Referring to FIG. 1 and FIG. 2, the method may include the following steps.

In S1, sitemap data of a target website is acquired and a vector graph of the sitemap data is generated.

In this embodiment, the target website may be a website where crawler data is to be identified. In practical applications, the target website usually has its own sitemap data, which is an XML file containing information of each access link in the target website. For example, in the sitemap data, each uniform resource locator (URL) in the target website and jump relationships between each URL and the other URLs may be included. The existing crawler tools or bypass monitoring tools may be used to acquire the sitemap data of the target website.

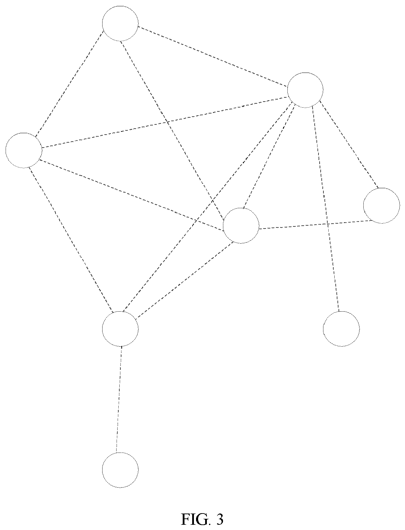

In this embodiment, after the sitemap data in an XML format is acquired, in order to facilitate the subsequent machine learning process, the sitemap data may be converted into a visual vector graph. Referring to FIG. 3, in the vector graph, multiple node locations may be included. The circles in FIG. 3 may be referred to the node locations. Herein, each node location may correspond to an access link in the target website. Specifically, each access link contained in the sitemap data may be identified, and then the node location corresponding to each access link may be determined based on the jump relationships between each access link and the other access links. Herein, the jump relationships between the access links may be determined by an access sequence of the access links. For example, if the page with an access link A contains access links A1 and A2, then jump relationships from A to A1 and from A to A2 may be constructed. Generally speaking, multiple access links with the jump relationships may be located close to each other in the vector graph. According to the jump relationships between the access links, the corresponding node location of each access link may be determined in the vector graph. Finally, the diagram containing the node locations may be used as the vector graph of the sitemap data. In practical application, the Verlet algorithm may be adopted to process the acquired sitemap data, so that the node coordinate corresponding to each access link may be calculated. These node coordinates may be used as node locations in the vector graph, so that each access link in the sitemap data may be mapped into the node locations in the vector graph. Furthermore, in the vector graph, there may also be connection lines between the node locations with the jump relationships. For example, in FIG. 3, the two node locations at both ends of the dotted line may be the node locations with the jump relationship.

In this way, by processing the sitemap data, the XML data may be converted into diagram data, which facilitates the subsequent machine learning process.

In S3, session data of the target website is acquired, and the session data is mapped into a subgraph in the vector graph based on requests contained in the session data.

In this embodiment, a training sample needs to be constructed before machine learning. Specifically, the training sample may be constructed based on the session data of the target website. In practical application, access data of the target website may be recorded in a traffic log of the target website. In this way, the traffic log of the target website may be read. In the traffic log, the access data of each session may be included. In this embodiment, the access data in the traffic log may be grouped by sessions, so as to obtain one or more groups of session data. For each group of session data, a corresponding training sample may be generated.

In this embodiment, each group of session data may include one or more requests, and these requests may include the access links. In order to identify an access behavior of each group of session data to the target website, the requests in the session data may be sorted according to access time. For example, the requests in the session data may be sorted in the order of the access time from first to last.

In an embodiment, after sorting the requests in the session data, in order to better characterize the access behavior of the session data, a certain number of requests may be selected for analysis. For example, the top W requests may be selected. In practical application, the certain number may be comprehensively determined according to the accuracy requirements of machine learning and the efficiency of machine learning. When the certain number is large, the access behavior of the session data may be accurately characterized, which, however, may result in a longer process of the machine learning. While when the certain number is small, the process of the machine learning may be shortened, but the access behavior of session data may not be accurately characterized.

In this embodiment, after identifying the requests contained in the session data, the node locations each of which corresponds to a respective one of the requests may be queried in the above vector graph according to the access links corresponding to the requests. In the vector graph, each node location may correspond to an access link. In this way, by identifying the requests in the session data, the access link corresponding to each request may be known, and the node location corresponding to each request in the vector graph may be determined. It should be noted that multiple different requests may point to the same access link, in which case, these requests may share the same node location in the vector graph.

In this embodiment, the access frequency of a certain access link in the target website may also be used as a feature of the session data. In view of this, when constructing the training sample, the access frequency of the access link may also be taken as a part of the training sample. Specifically, request information of each request in the session data may be traversed, and for any target request among the requests, the access frequency of the access link corresponding to the target request may be counted. The above request information may include various parameters of the request. For example, the request information may include various parameters such as an IP address of a request initiator, an access link to be requested, an access port of the request, and a duration of the request, etc. By means of statistical analysis on the request information of each request, the access frequency of each access link may be determined. The size of the access frequency may be represented by a node radius of a request node in the vector graph. The larger the access frequency, the larger the node radius of the request node. In this way, the node radius corresponding to the access frequency may be determined. In practical application, an appropriate increasing function may be selected, and the access frequency may be taken as an independent variable of the increasing function, and the node radius of the request node may be taken as a dependent variable of the increasing function. This may ensure that the larger the access frequency, the larger the radius of the request node. After the node radius corresponding to the access frequency is determined, a request node with the node radius may be generated, and the request node with the node radius may be taken as a request node matching the target request. In the above manner, the corresponding request nodes may be generated for each access link accessed by the session data, and the node radius of each request node may characterize the access frequency of the access link.

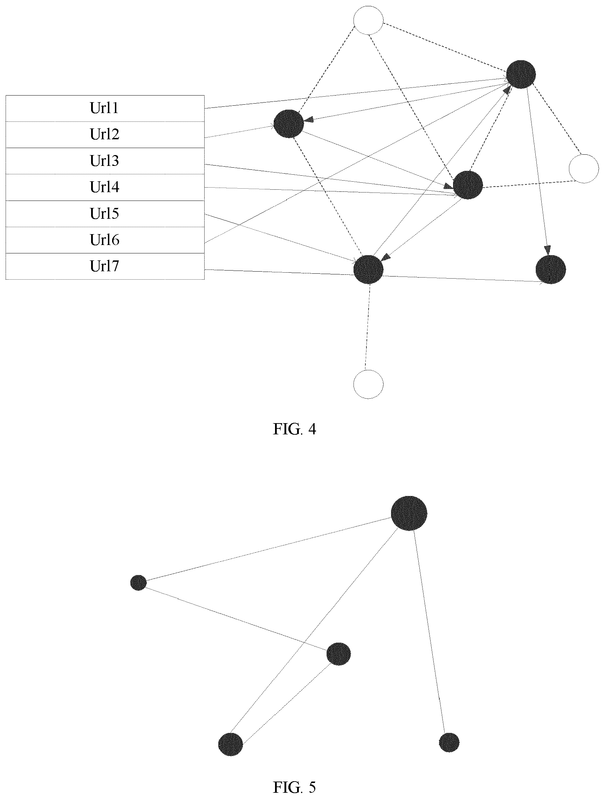

Referring to FIG. 4, after the node locations corresponding to the requests are determined in the vector graph and the request nodes matching the requests are generated, the generated request nodes may be filled in the corresponding node locations. In this way, some node locations in the vector graph may be filled by the request nodes generated according to the session data. In FIG. 4, the black filled circles may be the request nodes generated according to the session data.

In this embodiment, in order to indicate the access sequence of each access link, connection relationships between each request node and the other request nodes may further be determined according to the sorted requests. Specifically, in the generated request nodes, any two request nodes with adjacent access time may be determined. For example, in FIG. 4, url1 and url2 may be two adjacent request nodes. Two request nodes with adjacent access time indicate that the access sequence is also successive, so a connection line may be established between the two request nodes, thus indicating that the two request nodes are adjacent in access time. It should be noted that two request nodes with adjacent access time may also be the same request node. For example, for url3 and url4, although they are two requests connected in time, the two requests point to the same request node. In this case, the connection line may not be established. Therefore, after determining any two request nodes with adjacent access time among each request node, if the two request nodes are further determined to be different request nodes, a connection line may be established between the two request nodes.

It is certain that, in some scenarios, the connection line established between two request nodes may further be of directivity. The connection line with directivity may characterize the access sequence of the two request nodes. Generally speaking, as shown in FIG. 4, the request node with an earlier access time points to the request node with a later access time.

Referring to FIG. 5, after the request nodes are generated and the connection lines are established between the request nodes, a diagram formed by the request nodes with the connection relationships may be taken as a subgraph of the vector graph obtained by mapping. The subgraph may characterize the access behavior of the session data, so that the session data in an XML format may be converted into a diagram.

In S5, a session tag is added to the session data, where the session tag is configured to characterize whether the session data is crawler data, and a preset classifier is trained based on the session tag and the subgraph to obtain a trained classifier for distinguishing crawler data from non-crawler data.

In this embodiment, the generated subgraph may be used as the training sample. In order to measure whether the training result is accurate, it is also required to add the session tag to the session data, and the session tag may indicate whether the current session data is crawler data. In practical application, conventional methods may be used to judge whether the session data is crawler data, so as to add a corresponding session tag to the session data. It is certain that, for the accuracy of the session tag, a variety of conventional methods may be used to analyze the session data.

In this embodiment, after adding the session tag to the session data, the generated subgraph may be used as training data, and the session tag may be used as a standard to measure whether the training result is correct or not, so as to train the preset classifier. The preset classifier may be a conventional machine learning model. For example, the preset classifier may be a convolutional neural network model, a support vector machine, a recurrent neural network model, etc. It is certain that, in practical application, the corresponding model may be flexibly selected according to the requirements of accuracy and training efficiency. For example, a LeNet-5, an AlexNet or a ResNet model may be selected.

In this embodiment, when training the preset classifier, the generated subgraph may be input into the preset classifier. The preset classifier may have multiple levels of neurons, and each neuron may correspond to an internal parameter. When passing through the neurons at all levels, the input subgraph may be processed by the corresponding internal parameters, and finally a probability array may be output. The probability array may include two probability values, which respectively correspond to a probability of crawler data and a probability of non-crawler data. The classification result output by the preset classifier may be a data type corresponding to a larger probability value. For example, the probability array obtained by the preset classifier for the input subgraph is (0. 8, 0. 2), where the data type corresponding to the probability value of 0. 8 is crawler data, then the classification result output by the preset classifier is crawler data.

In this embodiment, the internal parameters initialized in the preset classifier may not be able to accurately predict the input subgraph, so it is required to compare the classification result output by the preset classifier with the actual session tag. If the two are consistent, the internal parameters may not be adjusted; if the two are inconsistent, an error function may be generated according to the difference between them. The error function may be used as a correction information to adjust the internal parameters in the preset classifier. After adjusting the internal parameters, the subgraph may be input into the preset classifier again, and the classification result may be compared with the session tag again. If the two are still inconsistent, the internal parameters may be adjusted continuously. In this way, through a repeated training of a large number of training samples, the classification result output by the preset classifier may finally be consistent with the actual session tag. In this way, the training process may be completed and the classifier for distinguishing crawler data from non-crawler data may be obtained.

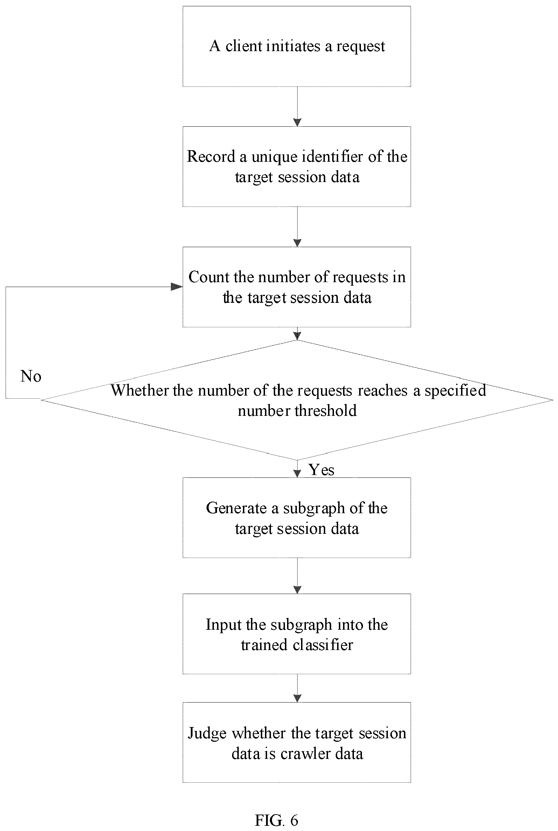

In an embodiment, after obtaining the trained classifier, the classifier may be used to predict the actual session data. Specifically, referring to FIG. 6, when a client initiates a request to a server for the target website, the server for the target website may record the current session data. Specifically, the server for the target website may record a unique identifier of the session data and the number of the requests in the session data.

In this embodiment, when the session data of the client needs to be identified, target session data initiated by the client for the target website may be acquired, and the target session data may be mapped into the target subgraph in the vector graph in the manner described in step S3. It is certain that, when processing the target session data, whether the number of the requests in the target session data reaches a specified number threshold may be judged first. The specified number threshold may be determined when training the classifier for distinguishing crawler data from non-crawler data. For example, during constructing of the training sample, after the requests in the session data are sorted according to the access time, W requests may be selected to construct the mapped subgraph. In this case, the specified number threshold may be W. In this way, if the number of the requests in the target session data does not reach the specified number threshold, a period of time may be continued to wait for until the number of the requests in the target session data increases to the specified number threshold. If the number of the requests in the target session data has exceeded the specified number threshold, the requests may be sorted according to the access time, and the requests of the specified number threshold among them may be selected to generate the corresponding target subgraph.

In this embodiment, after the target subgraph is generated, the target subgraph may be input into the trained classifier, and whether the target session data is crawler data may be judged through an output result of the classifier. In practical application, the output result of the classifier may be a text data, which may represent crawler data or non-crawler data. It is certain that, the output result of the classifier may also be a Boolean data, where 0 may represent non-crawler data and 1 may represent crawler data. In practical application, the output result of the classifier may also be of other data types, which will not be enumerated here.

In this embodiment, if it is determined that the target session data is crawler data, corresponding alarm information may be generated. The alarm information may include the unique identifier of the target session data, so as to facilitate subsequent data investigation.

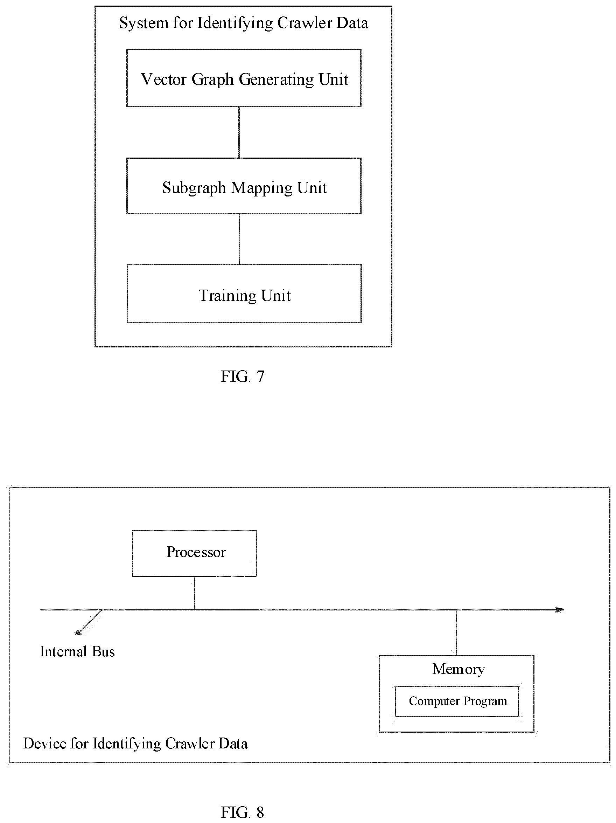

The present disclosure further provides a system for identifying crawler data. Referring to FIG. 7, the system includes:
a vector graph generating unit, configured to acquire sitemap data of a target website and generate a vector graph of the sitemap data;
a subgraph mapping unit, configured to acquire session data of the target website, and map the session data into a subgraph in the vector graph based on requests contained in the session data; and
a training unit, configured to add a session tag to the session data, where the session tag is configured to characterize whether the session data is crawler data, and train a preset classifier based on the session tag and the subgraph to obtain a trained classifier for distinguishing crawler data from non-crawler data.

In an embodiment, the subgraph mapping unit includes:
a node location query module, configured to identify the requests contained in the session data, and query node locations each of which corresponds to a respective one of the requests in the vector graph;
a node generating module, configured to generate request nodes each of which matches a respective one of the requests according to request information of the requests, and fill the generated request nodes in the corresponding node locations; and
a connection relationship determination module, configured to sort the requests according to access time, determine connection relationships between each of the request nodes and the other request nodes according to a sorting result, and take a diagram formed by the request nodes with the connection relationships as a subgraph obtained by mapping.

In an embodiment, the system further includes:
an access data acquisition unit, configured to acquire target session data initiated by a client for the target website, and map the target session data into a target subgraph of the vector graph; and
a prediction unit, configured to input the target subgraph into the trained classifier, and judge whether the target session data is crawler data according to an output result of the classifier.

Referring to FIG. 8, the present disclosure further provides a device for identifying crawler data, including a memory and a processor. The memory is configured to store a computer program that, when executed by the processor, may implement the above-described method for identifying crawler data.

In the present disclosure, the memory may include a physical device for storing the information, usually by digitizing the information and then storing it in a medium using electrical, magnetic or optical methods. The memory may further include: a device for storing the information by means of electric energy, such as RAM or ROM, etc., a device for storing the information by means of magnetic energy, such as a hard disk, a floppy disk, a magnetic tape, a magnetic core memory, a magnetic bubble memory or a U-disk; and a device for storing the information optically, such as a CD or a DVD. It is certain that there are other types of the memories, such as a quantum memory or a graphene memory, etc.

In the present disclosure, the processor may be implemented in any suitable manner. For example, the processor may take the form of, for example, a microprocessor or a processor and a computer-readable medium storing a computer-readable program code (e.g., a software or a firmware) executable by the (micro)processor, a logic gate, a switch, an application specific integrated circuit (ASIC), a programmable logic controller, an embedded microcontroller, etc.

It can be seen from the above that the technical solution provided by one or more embodiments of the present disclosure may identify crawler data through machine learning. Specifically, for a target website to be identified, the sitemap data of the target website may be acquired, which is usually the data in an eXtensible Markup Language (XML) format. In the present disclosure, the sitemap data may be converted into the vector graph, thereby converting the data in XML format into diagram data. Subsequently, according to the requests contained in the session data of the target website, the session data may be mapped into the subgraph of the vector graph. The subgraph may characterize the way in which the session data is accessed to. Since crawler data and non-crawler data are often accessed to in different ways, the subgraph obtained by mapping may be used to distinguish whether the session data is crawler data. Then, by using the session tag of the session data and the subgraph obtained by mapping, a machine learning algorithm may be adopted to train the preset classifier, so as to obtain the trained classifier for distinguishing crawler data from non-crawler data. According to the technical solution of the present disclosure, by converting the data into a diagram, the diagram may be used as a training sample to obtain an accurate classifier by training. Subsequently, the trained classifier may predict whether the input session data is crawler data. It can be seen that the technical solution provided by the present disclosure may accurately and efficiently predict whether the session data is crawler data through the classifier obtained by training.

Each embodiment in this specification is described in a progressive manner, and the same or similar parts between the various embodiments may be referred to each other. Each embodiment focuses on the differences from other embodiments. In particular, the embodiments of the system and the central server may be explained with reference to the introduction of the embodiments of the aforementioned method.

Those skilled in the art may appreciate that the embodiments of the present disclosure may be provided as a method, a system or a computer program product. Therefore, the present disclosure may take the form of an entirely hardware embodiment, an entirely software embodiment, or an embodiment combining software and hardware. Furthermore, the present disclosure may take the form of a computer program product implemented on one or more computer-usable storage media (including but not limited to a disk storage, a CD-ROM, an optical storage, etc.) containing a computer-usable program code therein.

The present disclosure is described with reference to flowcharts and/or block diagrams of the method, apparatus (system), and computer program product according to the embodiments of the present disclosure. It should be appreciated that each flow and/or block in the flowcharts and/or block diagrams and a combination of the flow and/or the block in the flowcharts and/or block diagrams may be implemented via computer program instructions. These computer program instructions may be provided to a processor of a general-purpose computer, a dedicated computer, an embedded processor, or other programmable data processing devices to produce a machine, so that the instructions executed by the processor of the computer or the other programmable data processing devices may produce an apparatus for implementing functions designated in one or more flows in the flowcharts and/or one or more blocks in the block diagrams.

These computer program instructions may also be stored in a computer-readable memory capable of directing the computer or the other programmable data processing devices to work in a specific mode, so that the instructions stored in the computer-readable memory may produce a manufacture including an instruction device, and the instruction device may implement the functions designated in one or more flows in the flowcharts and/or one or more blocks in the block diagrams.

These computer program instructions may also be loaded onto the computer or the other programmable data processing devices, so that a series of operational steps may be performed on the computer or the other programmable devices to produce a computer-implemented processing, such that the instructions executed on the computer or the other programmable devices may provide steps for implementing the functions designated in one or more flows in the flowcharts and/or one or more blocks in the block diagrams.

In a typical configuration, a computing device includes one or more central processing units (CPU), input/output interfaces, network interfaces, and internal storages.

The internal storage may include forms of a non-permanent memory, a random access memory (RAM), and/or a non-volatile memory in the computer-readable medium, such as a read only memory (ROM) or a flash RAM. The internal storage is an example of the computer-readable medium.

The computer-readable medium, including permanent and non-permanent, removable and non-removable media, may implement information storage by any method or technology. The information may be a computer-readable instruction, a data structure, a module of the program, or other data. Examples of the computer storage medium include, but not limited to, a phase change RAM (PRAM), a static random access memory (SRAM), a dynamic random access memory (DRAM), a random access memory (RAM) of other type, a read only memory (ROM), an electrically erasable programmable read only memory (EEPROM), a flash memory or other internal storage technologies, a compact disc read only memory (CD-ROM), a digital versatile disk (DVD) or other optical storage, a magnetic cassette, a magnetic tape magnetic disk storage or other magnetic storage devices or any other non-transmission medium, which may be used to store the information accessible by the computing device. As defined herein, the computer-readable medium does not include a temporary computer-readable medium (transitory media) such as a modulated data signal and a carrier wave.

It should be noted that in this document, the terms "include", "contain" or any other variant thereof are intended to cover a non-exclusive inclusion, such that a process, method, article, or device that includes a list of elements includes not only those elements, but also other elements not explicitly listed or inherent to such process, method, article, or device. Without further limitation, the element defined by the statement "includes a ..." does not exclude the presence of another identical element in the process, method, article or device that includes the element.

The above merely describes embodiments of the present disclosure and is not intended to limit the present disclosure. For those skilled in the art, the present disclosure may have various modifications and changes. Any modification, equivalent substitution, improvement, etc. made within the spirit and principle of the present disclosure shall fall within the scope of the claims of the present disclosure.

## Claims

1. A method for identifying crawler data, comprising:
acquiring sitemap data of a target website and generating a vector graph of the sitemap data;
acquiring session data of the target website, and mapping the session data into a subgraph in the vector graph based on requests contained in the session data; and
adding a session tag to the session data, wherein the session tag is configured to characterize whether the session data is crawler data, and training a preset classifier based on the session tag and the subgraph to obtain a trained classifier for distinguishing crawler data from non-crawler data.

2. The method according to claim 1, wherein the generating a vector graph of the sitemap data comprises:
identifying access links contained in the sitemap data, and determining node locations based on jump relationships between each of the access links and the other access links, each of the node locations corresponding to a respective one of the access links; and
taking a diagram containing the node locations as the vector graph of the sitemap data.

3. The method according to claim 1, wherein the acquiring the session data of a target website comprises:
reading a traffic log of the target website, and grouping access data in the traffic log by sessions to obtain one or more groups of session data.

4. The method according to claim 1, wherein the mapping the session data into a subgraph in the vector graph comprises:
identifying the requests contained in the session data, and querying node locations in the vector graph, each of the node locations corresponding to a respective one of the requests;
generating, according to request information of the requests, request nodes each of which matches a respective one of the requests, and filling the generated request nodes in the corresponding node locations; and
sorting the requests according to access time, determining connection relationships between each of the request nodes and the other request nodes according to a sorting result, and taking a diagram formed by the request nodes with the connection relationships as the subgraph obtained by mapping.

5. The method according to claim 4, wherein the generating request nodes each of which matches a respective one of the requests comprises:
counting an access frequency of an access link corresponding to a target request among the requests, and determining a node radius corresponding to the access frequency; and
generating a request node with the node radius, and taking the request node with the node radius as a request node matching the target request.

6. The method according to claim 4, wherein the determining connection relationships between each of the request nodes and the other request nodes according to a sorting result comprises:
determining any two request nodes with adjacent access time among the request nodes, and establishing a connection line between the two request nodes if the two request nodes are different request nodes.

7. The method according to claim 1, wherein the training a preset classifier based on the session tag and the subgraph comprises:
inputting the subgraph into the preset classifier, and comparing a classification result output by the preset classifier with the session tag; and
generating correction information if the classification result is inconsistent with the session tag, and adjusting internal parameters of the preset classifier by using the correction information in such a way that the classification result output by the preset classifier is consistent with the session tag after the subgraph is input into the preset classifier again.

8. The method according to claim 1, wherein after the obtaining a trained classifier for distinguishing crawler data from non-crawler data, the method further comprises:
acquiring target session data initiated by a client for the target website, and mapping the target session data into a target subgraph of the vector graph; and
inputting the target subgraph into the trained classifier, and judging whether the target session data is crawler data according to an output result of the classifier.

9. The method according to claim 8, wherein the mapping the target session data into a target subgraph of the vector graph comprises:
identifying whether the number of requests in the target session data reaches a specified number threshold, and mapping the target session data into the target subgraph of the vector graph if the specified number threshold is reached; wherein the specified number threshold is determined when training the classifier for distinguishing crawler data from non-crawler data.

10. A system for identifying crawler data, comprising:
a vector graph generating unit, configured to acquire sitemap data of a target website and generate a vector graph of the sitemap data;
a subgraph mapping unit, configured to acquire session data of the target website, and map the session data into a subgraph in the vector graph based on requests contained in the session data; and
a training unit, configured to add a session tag to the session data, wherein the session tag is configured to characterize whether the session data is crawler data, and train a preset classifier based on the session tag and the subgraph to obtain a trained classifier for distinguishing crawler data from non-crawler data.

11. The system according to claim 10, wherein the subgraph mapping unit comprises:
a node location query module, configured to identify the requests contained in the session data, and query node locations in the vector graph, each of the node locations corresponding to a respective one of the requests;
a node generating module, configured to generate, according to request information of the requests, request nodes each of which matches a respective one of the requests, and fill the generated request nodes in the corresponding node locations; and
a connection relationship determination module, configured to sort the requests according to access time, determine connection relationships between each of the request nodes and the other request nodes according to a sorting result, and take a diagram formed by the request nodes with the connection relationships as a subgraph obtained by mapping.

12. The system according to claim 10, wherein the system further comprises:
an access data acquisition unit, configured to acquire target session data initiated by a client for the target website, and map the target session data into a target subgraph of the vector graph; and
a prediction unit, configured to input the target subgraph into the trained classifier, and judge whether the target session data is crawler data according to an output result of the classifier.

13. A device for identifying crawler data, comprising a memory and a processor, wherein the memory is configured to store a computer program, when executed by the processor, causing the processor to implement the method according to any one of claims 1 to 9.
